# EUROPÄISCHE PATENTSCHRIFT

(11) **EP 4 403 446 B1**
(45) Veröffentlichungstag und Bekanntmachung des Hinweises auf die Patenterteilung: **19.03.2025**
(21) Anmeldenummer: 23151956.2
(22) Anmeldetag: 17.01.2023
(51) Int. Cl.: B62J 9/21, B62J 11/00

(54) **ADAPTER ZUM BEFESTIGEN EINES ZUBEHÖRTEILS AN EINEM LENKER**
ADAPTER FOR FASTENING AN ACCESSORY TO A HANDLEBAR
ADAPTATEUR POUR FIXER UN ACCESSOIRE À UN GUIDON

(43) Veröffentlichungstag der Anmeldung: 24.07.2024
(73) Patentinhaber: Strimlin, Arkadi, 63526 Erlensee (DE)
(72) Erfinder: Strimlin, Arkadi, 63526 Erlensee (DE)
(74) Vertreter: Michalski Hüttermann & Partner Patentanwälte mbB

(56) Entgegenhaltungen:
- DE-A1- 102014 117 466
- DE-U1- 202022 103 797

## Beschreibung

### Technisches Gebiet

Die vorliegende Erfindung betrifft einen Adapter zum Befestigen eines ersten Zubehörteils an einem aus einem Vorbau und einer an dem Vorbau gehaltenen Lenkerstange gebildeten Lenker eines Fortbewegungsmittels, aufweisend einen U-förmigen Grundkörper mit einem Mittelschenkel und zwei seitlichen Armen und eine an dem Mittelschenkel angeordnete Aufnahme für das erste Zubehörteil.

### Hintergrund der Erfindung

Es ist aus dem Stand der Technik bekannt, Zubehörteile an verschiedenen Stellen von Fortbewegungsmitteln zu befestigen. Bei Fahrrädern ist es etwa hinlänglich bekannt, Taschen seitlich an einem Gepäckträger, zwischen einem Unterrohr und einem Oberrohr oder etwa vorderseitig an einem Lenker anzubringen, Trinkflaschenhalter an dem Unterrohr oder beispielsweise hinter einem Sattel anzubringen oder einen Korb an dem Lenker oder auf dem Gepäckträger zu befestigen. Es ist weiterhin bekannt, als Zubehörteil eine Ortungsvorrichtung an einem Fortbewegungsmittel, etwa basierend auf GPS- oder Bluetooth-Verbindungen, in versteckter Weise anzuordnen, etwa in einem Rohr eines Fahrradrahmens.

Insbesondere ist es bekannt, Zubehörteile mittels eines Adapters an dem Lenker des Fortbewegungsmittels anzuordnen. Dazu weisen derartige Adapter üblicherweise einen U-förmigen Grundkörper mit zwei seitlichen Armen auf, mit denen sie die Montagestelle des Vorbaus an der Lenkerstange umgreifen und an denen Schellen befestigt werden, die links und rechts vom Vorbau die Lenkerstange zur Befestigung des Adapters umgreifen. Weiterhin üblicherweise werden derartige Adapter gegen ein gewichtsbedingtes Verdrehen um die Lenkerstange gegen den Vorbau abgestützt, beispielsweise mittels an dem Vorbau abgespannten Drahtseilen. An einer Aufnahme des Adapters können dann verschiedene Zubehörteile mittels standardisierter Verbindungsmittel aufgenommen werden wie etwa Taschen, Körbe oder dergleichen. Das Dokument DE202022103797U offenbart einen gattungsgemäßen Adapter.

Nachteilig erfordert das Vorsehen von Zubehörteilen je Zubehörteil eine separate Vorrichtung, die oftmals aufwändig zu montieren sind, wobei das Zubehörteil oft an einer schlecht zugänglichen Stelle des Fortbewegungsmittels befestigt wird und wobei die jeweiligen Vorrichtungen Belastungen während einer Fahrt, etwa Vibrationen auf unebenem Untergrund, nicht in befriedigender Weise dauerhaft standhalten.

### Beschreibung der Erfindung

Ausgehend von dieser Situation ist es eine Aufgabe der vorliegenden Erfindung, eine komfortable Befestigung von mehreren Zubehörteilen an einem Fortbewegungsmittel zu ermöglichen.

Die Aufgabe der Erfindung wird durch die Merkmale des unabhängigen Anspruchs 1 gelöst. Vorteilhafte Ausgestaltungen sind in den Unteransprüchen angegeben. Sofern technisch möglich, können die Lehren der Unteransprüche beliebig mit den Lehren der Haupt- und Unteransprüche kombiniert werden.

Nachfolgend werden Vorteile der beanspruchten Erfindungsaspekte erläutert und weiter nachfolgend bevorzugte modifizierte Ausführungsformen der Erfindungsaspekte beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

Soweit Elemente mit Hilfe einer Nummerierung bezeichnet sind, also beispielsweise "erstes Element", "zweites Element" und "drittes Element", so ist diese Nummerierung rein zur Differenzierung in der Bezeichnung vorgesehen und stellt keine Abhängigkeit der Elemente voneinander oder eine zwingende Reihenfolge der Elemente dar. Das heißt insbesondere, dass beispielsweise ein eine Vorrichtung oder ein Verfahren nicht ein "erstes Element" aufweisen muss, um ein "zweites Element" aufweisen zu können. Auch kann die Vorrichtung bzw. das Verfahren ein "erstes Element", sowie ein "drittes Element" aufweisen, ohne aber zwangsläufig ein "zweites Element" aufzuweisen. Es können auch mehrere Einheiten eines Elements einer einzelnen Nummerierung vorgesehen sein, also beispielsweise mehrere "erste Elemente".

Erfindungsgemäß wird die Aufgabe gelöst durch einen Adapter zum Befestigen eines ersten Zubehörteils an einem aus einem Vorbau und einer an dem Vorbau gehaltenen Lenkerstange gebildeten Lenker eines Fortbewegungsmittels, aufweisend einen U-förmigen Grundkörper mit einem Mittelschenkel und zwei seitlichen Armen, eine an dem Mittelschenkel angeordnete Aufnahme für das erste Zubehörteil und einen mit dem Grundkörper zur Befestigung des Adapters an dem Lenker lösbar verbindbaren Befestigungskörper, wobei die seitlichen Arme jeweils mit dem Befestigungskörper eine Schelle zum Umgreifen der Lenkerstange bilden und wobei der Befestigungskörper eine Momentenstütze zum Abstützen des Adapters an dem Vorbau aufweist, wobei der Grundkörper eine Ausnehmung zur Aufnahme einer Ortungsvorrichtung aufweist, wobei die Ausnehmung bei miteinander verbundenen Grundkörper und Befestigungskörper durch den Befestigungskörper überdeckt ist oder der Befestigungskörper eine Ausnehmung zur Aufnahme einer Ortungsvorrichtung aufweist, wobei die Ausnehmung bei miteinander verbundenen Grundkörper und Befestigungskörper durch den Grundkörper überdeckt ist.

Soweit auf eine Oberseite, eine Unterseite, eine vordere Richtung und/oder eine hintere Richtung oder eine bestimmte Seite Bezug genommen wird, so bestimmt sich dieser Bezug aus einer üblichen Fahrtposition des Fortbewegungsmittels, bei dem es aufrecht auf einem Untergrund steht. Die Unterseite ist dann dem Untergrund zugewandt, während die Oberseite dem Untergrund abgewandt ist. Die vordere Richtung erstreckt sich in einer Fahrtrichtung des Fortbewegungsmittels, wobei die Lenkerstange in der Fahrtrichtung an einem vorderen Ende des Vorbaus befestigt ist. Ebenso ergeben sich die Seitenrichtungen anhand einer Blickrichtung in Fahrtrichtung bzw. vorderen Richtung. Es versteht sich für den Fachmann, diese Richtungen entsprechend auf anderweitige Ausgestaltungen des Fortbewegungsmittels zu übertragen, etwa, wenn sich die Lenkerstange in der Fahrtrichtung an einem hinteren Ende des Vorbaus angeordnet ist. Insofern sind von dem genannten Verständnis der Richtungen abweichende Anordnungen mit der vorliegenden Beschreibung implizit mit umfasst.

Als Adapter wird generell eine Verbindungsvorrichtung zwischen dem Lenker und einem Zubehörteil verstanden. Der Adapter weist also Vorrichtungen zum Befestigen an dem Lenker und Vorrichtungen zur Aufnahme des Zubehörteils auf und bildet insofern die Vorrichtung zur Aufnahme des Zubehörteils an dem Fortbewegungsmittel bzw. Lenker aus.

Die seitlichen Arme des Grundkörpers sind insbesondere zum Umgreifen der Montagestelle der Lenkerstange an dem Vorbau vorgesehen, sodass sie mit dem Befestigungskörper eine Schelle an der rechten Seite des Vorbaus und eine Schelle an der linken Seite des Vorbaus bilden. Die Schellen sind insbesondere derart durch den Grundkörper und den Befestigungskörper gebildet, dass die Körper jeweils Teilschalen, insbesondere Halbschalen ausbildet, die zusammengesetzt den Lenker in der Art einer Schelle umgreifen. Die Teilschalen bilden dabei im montierten Zustand insbesondere zueinander einen Spalt zum Erzeugen einer Klemmkraft mittels entsprechenden Verbindungsmitteln wie etwa Schrauben. Der Mittelschenkel erstreckt sich bevorzugt zwischen den seitlichen Armen an der vorderen Seite des Adapters und bildet insofern die Aufnahme für das Zubehörteil vor dem Lenker aus. Bevorzugt sind die Abmessungen des Grundkörpers derart ausgebildet, dass eine ebenfalls im Bereich des Montagepunktes der Lenkerstange an dem Vorbau vorgesehene Konsole zur Steuerung eines Elektromotors des Fortbewegungsmittels umgriffen werden kann.

Eine Ortungsvorrichtung ist eine Vorrichtung zum Erzeugen eines ortbaren Signals, sodass eine Ortung durch ein entsprechendes Empfangsgerät zumindest in der Umgebung der Ortungsvorrichtung ermöglicht wird. Insbesondere ist die Ortungsvorrichtung eine Vorrichtung zum Erzeugen eines Bluetooth- oder GPS-Signals.

Die vorliegende Offenbarung umfasst nun die Lehre, dass der Adapter neben der Aufnahme für das erste Zubehörteil, an dem ein beliebiges Zubehörteil angeordnet werden kann, etwa eine Tasche oder ein Korb, auch eine Ausnehmung für ein zweites Zubehörteil ausbildet, nämlich eine Ortungsvorrichtung. Vorteilhaft ist insofern durch den Adapter die Möglichkeit geschaffen, mehrere Zubehörteile gleichzeitig mit lediglich einer Vorrichtung - dem Adapter - an dem Fortbewegungsmittel vorzusehen. Die Ausnehmung ist dabei erfindungsgemäß derart an dem Grundkörper oder Befestigungskörper angeordnet, dass sie durch den Befestigungskörper bzw. den Grundkörper verdeckt ist, sodass die Ortungsvorrichtung in versteckter Weise an dem Adapter aufgenommen ist und insofern die Funktion einer Diebstahlsicherung erfüllt. Die Position der Ortungsvorrichtung bzw. der Umstand, dass eine Ortungsvorrichtung an dem Fortbewegungsmittel angeordnet ist, ist also für einen Dieb nicht zu erkennen, sodass ihm ein Abschalten oder Entfernen der Ortungsvorrichtung nicht möglich ist.

In einer bevorzugten Ausführungsform des Adapters weist der Befestigungskörper zumindest einen Vorsprung auf, wobei der Vorsprung sich bei miteinander verbundenen Grundkörper und Befestigungskörper an einem seitlichen Arm über die Schelle hinaus hin zu dem Mittelschenkel erstreckt und die an dem seitlichen Arm ausgebildete Ausnehmung zur Aufnahme der Ortungsvorrichtung überdeckt. Es ist so ermöglicht, die verdeckte Ausnehmung an dem seitlichen Arm im Bereich zwischen Schelle und Mittelschenkel in durch den Befestigungskörper verdeckter Weise vorzusehen. In diesem Bereich weist der Adapter vorteilhaft das größtmögliche Platzangebot für die Ortungsvorrichtung auf, sodass die komfortable Aufnahme einer relativ großen Ortungsvorrichtung ermöglicht ist.

Bevorzugt ist die Momentenstütze als mit dem Befestigungskörper einstückig ausgebildeter Bogen ausgebildet. Der Bogen ist dementsprechend ebenso wie der Befestigungskörper aus einem festen, steifen Material ausgebildet, etwa aus einem Kunststoffmaterial, insbesondere aus einem Thermoplast, und/oder zumindest teilweise aus einem metallischen Werkstoff. Auf diese Weise ist eine besonders steife Momentenstütze geschaffen, mittels der ein entsprechend besonders großes Moment abgestützt werden kann. Insbesondere ist dann eine lange Ausbildung der seitlichen Arme ermöglicht, sodass der Mittelschenkel gegenüber dem Lenker relativ weit auskragt und auf diese Weise ausreichend Platz für eine an dem Vorbau vorgesehene Konsole zur Steuerung eines Elektromotors des Fortbewegungsmittels ermöglicht ist.

In einer Ausgestaltung der vorgenannten Ausführungsform weist die Momentenstütze ein Gewinde zur Aufnahme einer Distanzschraube zum Beabstanden der Momentenstütze von dem Vorbau auf. Mittels der Distanzschraube ist die Momentenstütze bzw. der Adapter an dem Vorbau abgestützt. Auf diese Weise ist eine einfache Einstellung des Abstands der Momentenstütze zu dem Vorbau ermöglicht, sodass der Adapter in seiner Winkelposition gegenüber der Lenkerstange auf einfache Weise für eine das Fortbewegungsmittel benutzende Person einstellbar ist.

Besonders bevorzugt weist die Momentenstütze im Bereich um das Gewinde eine Materialverstärkung auf, wobei sich das Gewinde durch die Materialverstärkung erstreckt. In dem Bereich um das Gewinde treten in der Momentenstütze Lastspitzen auf. Durch die Materialverstärkung ist es ermöglicht, diese Lastspitzen auch bei langen seitlichen Armen und einer großen Last durch das erste Zubehörteil im Material ohne Versagen aufzunehmen. Insofern ist durch die Materialverstärkung vorteilhaft ein besonders großes Moment durch den Adapter aufnehmbar, sodass der Mittelschenkel weit auskragen kann und in besonderer Weise ausreichend Platz für eine an dem Vorbau vorgesehene Konsole zur Steuerung eines Elektromotors des Fortbewegungsmittels ermöglicht ist.

In einer weiteren Ausführungsform ist an dem Mittelschenkel, insbesondere an einer Oberseite des Mittelschenkels, eine erste Gewindebohrung oder ein erster Gewindestift zur Aufnahme einer Kamera und/oder eines mobilen Endgeräts angeordnet. Es ist so vorteilhaft eine weitere Möglichkeit zur Aufnahme eines dritten Zubehörteils geschaffen, ohne dass dazu weitere Vorrichtungen an dem Fortbewegungsmittel angeordnet werden müssen. Dabei ist die Kamera zum üblicherweise gewünschten Erfassen des Bereichs vor dem Fortbewegungsmittel bzw. ein Mobiltelefon zum einfachen Bedienen und Ablesen durch die das Fortbewegungsmittel nutzende Person besonders günstig an dem Fortbewegungsmittel positioniert. Eine Kamera ist beispielsweise eine sogenannte Actioncam oder eine sogenannte Dashcam. Ein mobiles Endgerät ist etwa ein Mobiltelefon oder ein Tablet. Es kann an der Aufnahme auch ein den genannten Zubehörteilen ähnliches Zubehörteil oder etwa ein Beleuchtungsmittel angeordnet sein.

Besonders bevorzugt weist die erste Gewindebohrung oder der erste Gewindestift ein 1/4" UNC Gewinde auf. Ein 1/4" UNC Gewinde ist als Standard für Kameras und dergleichen etabliert, sodass die erste Gewindebohrung oder der erste Gewindestift auf diese Weise mit einer Vielzahl von verfügbaren Kameras, Stativen, Halterungen und dergleichen einfach verbunden werden kann.

In einer weiteren, besonders bevorzugten Ausführungsform ist an zumindest einem seitlichen Arm an einer Außenseite eine zweite Gewindebohrung oder ein zweiter Gewindestift zur Aufnahme einer Trinkflaschenhalterung angeordnet ist. Es ist so vorteilhaft noch eine weitere Möglichkeit zur Aufnahme eines vierten Zubehörteils geschaffen, ohne dass dazu weitere Vorrichtungen an dem Fortbewegungsmittel angeordnet werden müssen. Insbesondere kann an einer zweiten Gewindebohrung eine standardisierte Flaschenhalterung angeordnet werden, wobei dieser bzw. eine darin aufgenommene Trinkflasche sich dann vertikal seitlich neben dem Adapter erstreckt und somit gegen ein Auslaufen geschützt und im Bereich des Lenkers auf einfache Weise zugänglich angeordnet ist. Durch die vorbeschriebene relativ lange Ausbildung der seitlichen Arme entsteht zwischen der Lenkerstange und dem ersten Zubehörteil vorteilhaft ausreichend Platz für eine Trinkflasche.

In einer weiteren Ausführungsform ist an dem Mittelschenkel eine Arretiervorrichtung zum Arretieren des ersten Zubehörteils an dem Adapter angeordnet. Das erste Zubehörteil kann dann auf einfache Weise an dem Adapter befestigt und arretiert werden und ebenso einfach aus der Arretierung gelöst und von dem Adapter abgenommen werden.

Besonders bevorzugt durchgreift die Arretiervorrichtung den Mittelschenkel vertikal, weist auf der Unterseite des Mittelschenkels eine Arretierfalle auf und bildet auf der Oberseite des Mittelschenkels ein Bedienelement zum Lösen der Arretierfalle. Die Arretiervorrichtung ist dann besonders einfach zu bedienen, wobei das Bedienelement auf der Oberseite besonders einfach zugänglich ist. Die Arretierfalle bildet bevorzugt einen Hintergriff für das erste Zubehörteil aus und ist in der Hochrichtung verschiebbar ausgebildet.

In einer Ausgestaltung der vorgenannten Ausführungsform weist die Arretiervorrichtung ein Schloss zum Sperren des Bedienelements auf, wobei das Schloss insbesondere in dem Bedienelement integriert ausgebildet ist. Auf diese Weise kann das erste Zubehörteil an dem Fortbewegungsmittel gegen unberechtigtes Lösen aus der Arretierung gesichert werden. Durch ein integriertes Ausbilden des Schlosses in dem Bedienelement ist zudem das Schloss einfach zugänglich und auf zusätzlichen Bauraum an dem Mittelschenkel für das Schloss kann verzichtet werden.

In einer weiteren Ausführungsform ist die Aufnahme für das Zubehörteil in einer Querrichtung dreigeteilt mit zwei äußeren Vorsprüngen und einem mittleren Vorsprung ausgebildet, wobei an einer Oberseite der äußeren Vorsprünge und an einer Unterseite des mittleren Vorsprungs jeweils Hintergriffe ausbildet sind. Es ist so ermöglicht, dass das erste Zubehörteil sowohl an den Hintergriffen zu der vorderen Richtung befestigt ist und zudem zwischen den Vorsprüngen zu seitlichen Richtungen befestigt ist, indem es seitlich an die Vorsprünge anschlägt. Das erste Zubehörteil ist insofern sicher und gegenüber Erschütterungen während der Nutzung des Fortbewegungsmittels fest an der Aufnahme befestigbar. Weiter bevorzugt weisen die äußeren Vorsprünge und der mittlere Vorsprung eine Quernut auf, in die das erste Zubehörteil zum weiteren Formschluss zwischen erstem Zubehörteil und dem Adapter eingreift.

Besonders bevorzugt ist der Hintergriff an der Unterseite des mittleren Vorsprungs durch die Arretierfalle ausgebildet. Durch das Lösen der Arretierfalle ist dann der Hintergriff an der Unterseite des mittleren Vorsprungs auflösbar, sodass das erste Zubehörteil an der Unterseite nach vorne herausgeklappt und anschließend zum Lösen aus dem Hintergriff an der Oberseite der äußeren Vorsprünge nach oben verschoben werden kann. Dabei gelangt das erste Zubehörteil auch aus dem Eingriff zwischen den Vorsprüngen heraus und ist somit insgesamt von dem Adapter gelöst.

Nach einem zweiten Aspekt der Erfindung wird die Aufgabe weiterhin gelöst durch eine Lenkeranordnung mit einem aus einem Vorbau und einer an dem Vorbau gehaltenen Lenkerstange gebildeten Lenker, einem vorbeschriebenen Adapter nach dem ersten Aspekt der Erfindung und einem an dem Adapter aufgenommenen ersten Zubehörteil. Mit der Lenkeranordnung sind die bezüglich des Adapters vorbeschriebenen Vorteile entsprechend zu erreichen.

Bevorzugt ist bei der Lenkeranordnung die Aufnahme für das Zubehörteil in einer Querrichtung dreigeteilt mit zwei äußeren Vorsprüngen und einem mittleren Vorsprung ausgebildet, wobei an einer Oberseite der äußeren Vorsprünge und an einer Unterseite des mittleren Vorsprungs jeweils Hintergriffe ausbildet sind, und wobei das erste Zubehörteil einen Bügel zum Hintergreifen der Hintergriffe und zum Durchgreifen von Zwischenräumen zwischen den äußeren Vorsprüngen und dem mittleren Vorsprung aufweist. Der Bügel verläuft also lediglich oberhalb oder seitlich der Vorsprünge und nicht vor den Vorsprüngen, sodass das erste Zubehörteil selbst an den Vorsprüngen anliegen kann, ohne dass es durch eine Befestigungsvorrichtung von den Vorsprüngen beabstandet ist. Auf diese Weise ist der durch das erste Zubehörteil auf den Adapter mit Bezug zu der Rotationsachse der Schellen ausgeübte Moment verringert.

### Kurze Beschreibung der Zeichnungen

Nachfolgend wird die Erfindung unter Bezugnahme auf die anliegenden Zeichnungen anhand bevorzugter Ausführungsbeispiele näher erläutert. Die Formulierung Figur ist in den Zeichnungen mit Fig. abgekürzt.

In den Zeichnungen zeigen
- Fig. 1: eine Explosionsdarstellung eines Adapters gemäß einem bevorzugten Ausführungsbeispiel des ersten Aspekts der Erfindung;
- Fig. 2: eine perspektivische Ansicht des Grundkörpers des Adapters gemäß Figur 1;
- Fig. 3: eine Detailansicht des Adapters gemäß Figur 1;
- Fig. 4: eine seitliche, teilweise geschnittene Ansicht des Adapters gemäß Figur 1;
- Fig. 5: eine weitere perspektivische Ansicht des Adapters gemäß Figur 1; und
- Fig. 6: eine perspektivische Ansicht eines Adapters gemäß einem bevorzugten Ausführungsbeispiel des ersten Aspekts der Erfindung mit einem daran angeordnetem ersten Zubehörteil.

### Detaillierte Beschreibung der Zeichnungen

Die beschriebenen Ausführungsbeispiele sind lediglich Beispiele, die im Rahmen der Ansprüche auf vielfältige Weise modifiziert und/oder ergänzt werden können.

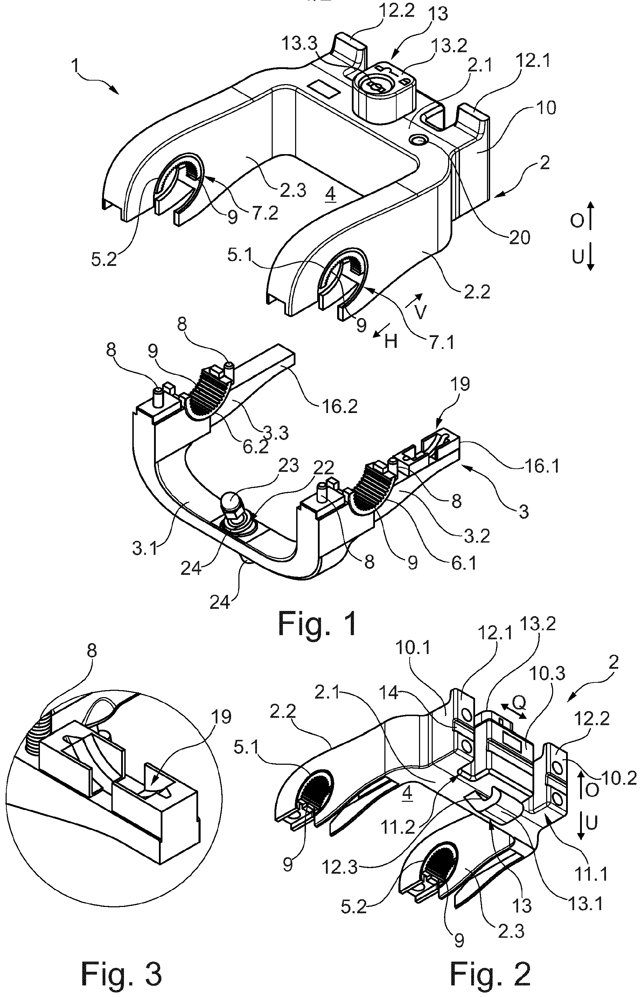

Figur 1 zeigt eine Explosionsdarstellung eines Adapters 1 zum Befestigen eines nicht dargestellten ersten Zubehörteils an einem ebenfalls nicht dargestellten Lenker, aufweisend einen Grundkörper 2 und einen Befestigungskörper 3. Der Grundkörper 2 ist zudem in Figur 2 in einer weiteren Perspektive dargestellt. Der Grundkörper 2 ist insgesamt U-förmig mit einem Mittelschenkel 2.1, einem ersten seitlichen Arm 2.2 und einem zweiten seitlichen Arm 2.3 ausgebildet, wobei sich der Mittelschenkel 2.1 zwischen den seitlichen Armen 2.2, 2.3 erstreckt und diese verbindet. Der Grundkörper 2 umschließt einen Raum 4, der bevorzugt derart groß dimensioniert ist, dass der Grundkörper 2 eine an dem Lenker im Bereich des Vorbaus angeordnete Konsole zur Steuerung eines Elektromotors eines Fortbewegungsmittels umgreift. Der Befestigungskörper 3 ist aus einer als Bogen ausgebildeten Momentenstütze 3.1 und mit den seitlichen Armen 2.2, 2.3 korrespondierenden Seitenstücken 3.2, 3.3 gebildet.

Der Adapter 1 definiert mehrere Raumrichtungen, nämlich eine obere Richtung O, eine untere Richtung U, eine vordere Richtung V und eine hintere Richtung H. An Enden der seitlichen Arme 2.2, 2.3 in der hinteren Richtung sind an dem Grundkörper 2 Halbschalen 5.1, 5.2 ausgebildet, die mit an den Seitenstücken 3.2, 3.3 des Befestigungskörpers 3 angeordneten Halbschalen 6.1, 6.2 Schellen 7.1, 7.2 zum Halten des Adapters 1 an einer nicht dargestellten Lenkerstange bildet, wobei die Schellen 7.1, 7.2 insbesondere jeweils zum Befestigen an der Lenkerstange an einer Seite des Vorbaus vorgesehen sind. Zum Ausbilden der Schellen 7.1, 7.2 werden der Grundkörper 2 und der Befestigungskörper 3 nacheinander von oben bzw. unten an der Lenkerstange angelegt und dann mittels als Schrauben ausgebildeten Verbindungsmitteln 8 miteinander verbunden. Dabei erzeugen die Verbindungsmittel 8 mit an den Schellen 7.1, 7.2 ausgebildeten, nicht näher dargestellten Spalten eine Klemmkraft auf die Lenkerstange. In den Halbschalen 5.1, 5.2, 6.1, 6.2 sind ferner Hafthülsen 9 zum Verbessern des Kraftschlusses zwischen den Schellen 7.1, 7.2 und der Lenkerstange angeordnet.

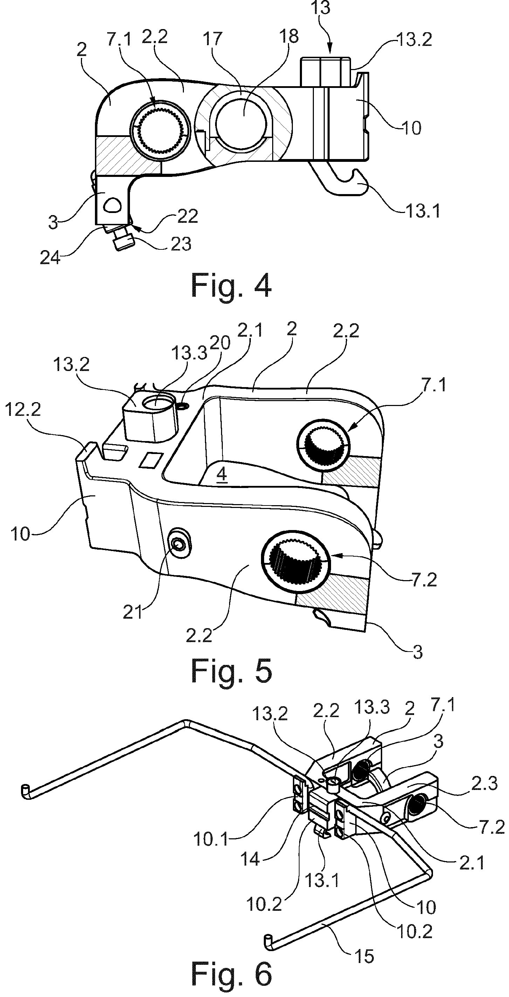

An dem Mittelschenkel 2.1 ist vorderseitig eine Aufnahme 10 für ein nicht dargestelltes erste Zubehörteil angeordnet, die in Figur 2 näher darrgestellt ist. Die Aufnahme 10 ist in einer Querrichtung Q dreigeteilt mit zwei äußeren Vorsprüngen 10.1, 10.2 und einem mittleren Vorsprung 10.3 ausgebildet. Zwischen den äußeren Vorsprüngen 10.1, 10.2 und dem mittleren Vorsprung 10.3 sind insofern Zwischenräume 11.1, 11.2 ausgebildet. An den äußeren Vorsprüngen 10.1, 10.2 sind weiterhin an der Oberseite Hintergriffe 12.1, 12.2 ausgebildet, wobei an dem mittleren Vorsprung 10.3 an der unteren Seite ein Hintergriff 12.3 durch eine Arretierfalle 13.1 ausgebildet ist. Die Vorsprünge 10.1, 10.2, 10.3 weisen weiterhin eine Quernut 14 auf. Das erste Zubehörteil kann dann die Hintergriffe 12.1, 12.2, 12.3 hintergreifen und gleichzeitig in die Zwischenräume 12.1, 12.2 zum seitlichen Halten des ersten Zubehörteils eingreifen. Ein entsprechendes an dem Adapter 1 angeordnetes erstes Zubehörteil 15 ist schematisch als Bügel in Figur 6 dargestellt. Der Bügel erstreckt sich dabei lediglich oberhalb und seitlich der Vorsprünge 10.1, 10.2, 10.3 und nicht davor, sodass das erste Zubehörteil 15 besonders nah an dem Adapter 1 anliegend ausgebildet ist. Alternativ kann sich ein Befestigungsmittel des ersten Zubehörteils 15 auch in nicht dargestellter Weise vor dem Adapter 1 erstrecken und zum weiteren Formschluss in die Quernut 14 eingreifen. In beiden Fällen ist das erste Zubehörteil 15 sicher in allen Raumrichtungen an der Aufnahme 10 gehalten.

Zum Arretieren des ersten Zubehörteils 15 bildet die Arretierfalle 13.1 mit einem Bedienelement 13.2 eine Arretiervorrichtung 13, die den Mittelschenkel 2.1 in der Hochrichtung durchgreift, wie auch in Figur 4 näher dargestellt ist. Durch Drücken des Bedienelements 13.2 wird die Arretierfalle 13.1 nach unten bewegt und der Hintergriff 12.3 freigegeben. Die Arretiervorrichtung 13 weist weiterhin ein in dem Bedienelement 13.2 integriertes Schloss 13.3 zum Sperren der Arretiervorrichtung 13 auf.

Wie in den Figuren 1, 3 und 4 dargestellt, weisen die Seitenstücke 3.2, 3.3 des Befestigungskörpers 3 Vorsprünge 16.1, 16.2 auf, die sich von den Schellen 7.1, 7.2 nach vorne erstrecken und mit Unterseiten der seitlichen Arme 2.2, 2.3 des Grundkörpers 2 zusammenwirken. An dem seitlichen Arm 2.2 ist dabei eine Ausnehmung 17 zur Aufnahme einer Ortungsvorrichtung 18 angeordnet, die in der Schnittansicht der Figur 4 mit darin angeordneter Ortungsvorrichtung 18 dargestellt ist. In der Ausnehmung 17 sowie an dem mit dem seitlichen Arm 2.2 korrespondierenden Vorsprung 16.1 sind entsprechende Formgebungen 19 vorgesehen, die die Aufnahme bestimmter Ortungsvorrichtungen 18 formschlüssig ermöglichen. Dabei ist bei montiertem Adapter 1 die Ausnehmung 17 durch den Vorsprung 16.1 überdeckt und insofern von außen nicht zu erkennen.

An einer Oberseite des Mittelschenkels 2.1 ist weiterhin, wie in den Figuren 1 und 5 dargestellt, eine erste Gewindebohrung 20 zur Aufnahme einer Kamera und/oder eines mobilen Endgeräts angeordnet. Insofern kann eine Kamera oder eine Endgerät als drittes Zubehörteil neben dem ersten Zubehörteil und der Ortungsvorrichtung 18 an dem Adapter 1 angeordnet werden.

Weiterhin ist, wie in Figur 5 dargestellt, an dem seitlichen Arm 2.2 an einer Außenseite eine zweite Gewindebohrung 21 zur Aufnahme einer Trinkflaschenhalterung angeordnet. Insofern kann eine Trinkflasche als viertes Zubehörteil neben dem ersten Zubehörteil, der Ortungsvorrichtung 18 und dem dritten Zubehörteil an dem Adapter 1 angeordnet werden.

Wie in den Figuren 1 und 4 näher dargestellt, weist die als Bogen ausgebildete Momentenstütze 3.1 ein Gewinde 22 mit darin aufgenommener Distanzschraube 23 zum Beabstanden der Momentenstütze 3.1 von einem nicht dargestellte Vorbau auf. Die Momentenstütze 3.1 ist insofern durch die Distanzschraube 23 gegen den Vorbau abgestützt und kann mittels der Distanzschraube 23 in ihrem Abstand zu dem Vorbau eingestellt werden, um die Winkelposition des Adapters 1 an dem Lenker einzustellen. An der Momentenstütze 3.1 ist für das Gewinde 22 eine Materialverstärkung 24 vorgesehen, die sich sowohl oberhalb als auch unterhalb der Momentenstütze 3.1 erstreckt und durch die sich das Gewinde 22 gänzlich erstreckt. Durch die Materialverstärkung 24 können an dem Gewinde 22 auftretende Lastspitzen auch bei großen Momenten in der Momentenstütze 3.1 ohne Materialversagen aufgenommen werden, sodass der Adapter 1 mit einer weiten Auskragung des Mittelschenkels 2.1 gegenüber dem Lenker ausgebildet werden kann und der Raum 4 ausreichend groß zum Umgreifen einer Konsole zum Steuern eines Elektromotors des Fortbewegungsmittels ausbildbar ist.

### Bezugszeichenliste

- 1: Adapter
- 2: Grundkörper
- 2.1: Mittelschenkel des Grundkörpers
- 2.2: erster seitlicher Arm des Grundkörpers
- 2.3: zweiter seitlicher Arm des Grundkörpers
- 3: Befestigungskörper
- 3.1: Momentenstütze des Befestigungskörpers
- 3.2: erstes Seitenstück des Befestigungskörpers
- 3.3: zweites Seitenstück des Befestigungskörpers
- 4: von dem Grundkörper umschlossener Raum
- 5.1: erste Halbschale des Grundkörpers
- 5.2: zweite Halbschale des Grundkörpers
- 6.1: erste Halbschale des Befestigungskörpers
- 6.2: zweite Halbschale des Befestigungskörpers
- 7.1: erste Schelle
- 7.2: zweite Schelle
- 8: Verbindungsmittel
- 9: Hafthülse
- 10: Aufnahme für das erste Zubehörteil
- 10.1: erster äußerer Vorsprung
- 10.2: zweiter äußerer Vorsprung
- 10.3: mittlerer Vorsprung
- 11.1: erster Zwischenraum
- 11.2: zweiter Zwischenraum
- 12.1: Hintergriff des ersten äußeren Vorsprungs
- 12.2: Hintergriff des zweiten äußeren Vorsprungs
- 12.3: Hintergriff des mittleren Vorsprungs
- 13: Arretiervorrichtung
- 13.1: Arretierfalle
- 13.2: Bedienvorrichtung der Arretiervorrichtung
- 13.3: Schloss der Arretiervorrichtung
- 14: Quernut
- 15: erstes Zubehörteil
- 16.1: Vorsprung des ersten Seitenstücks des Befestigungskörpers
- 16.2: Vorsprung des zweiten Seitenstücks des Befestigungskörpers
- 17: Ausnehmung zur Aufnahme einer Ortungsvorrichtung
- 18: Ortungsvorrichtung
- 19: Formgebung
- 20: erste Gewindebohrung
- 21: zweite Gewindebohrung
- 22: Gewinde
- 23: Distanzschraube
- 24: Materialverstärkung

- H: hintere Richtung
- O: obere Richtung
- Q: Querrichtung
- U: untere Richtung
- V: vordere Richtung

## Patentansprüche

1. Adapter (1) zum Befestigen eines ersten Zubehörteils (15) an einem aus einem Vorbau und einer an dem Vorbau gehaltenen Lenkerstange gebildeten Lenker eines Fortbewegungsmittels, aufweisend
einen U-förmigen Grundkörper (2) mit einem Mittelschenkel (2.1) und zwei seitlichen Armen (2.2, 2.3);
eine an dem Mittelschenkel (2.1) angeordnete Aufnahme (10) für das erste Zubehörteil (15); und
einen mit dem Grundkörper (2) zur Befestigung des Adapters (1) an dem Lenker lösbar verbindbaren Befestigungskörper (3);
wobei die seitlichen Arme (2.2, 2.3) jeweils mit dem Befestigungskörper (3) eine Schelle (7.1, 7.2) zum Umgreifen der Lenkerstange bilden; und
wobei der Befestigungskörper (3) eine Momentenstütze (3.1) zum Abstützen des Adapters (1) an dem Vorbau aufweist;
**dadurch gekennzeichnet , dass**
der Grundkörper (2) eine Ausnehmung (17) zur Aufnahme einer Ortungsvorrichtung (18) aufweist, wobei die Ausnehmung (17) bei miteinander verbundenen Grundkörper (2) und Befestigungskörper (3) durch den Befestigungskörper (3) überdeckt ist
oder
der Befestigungskörper (3) eine Ausnehmung zur Aufnahme einer Ortungsvorrichtung (18) aufweist, wobei die Ausnehmung bei miteinander verbundenen Grundkörper (2) und Befestigungskörper (3) durch den Grundkörper (2) überdeckt ist.

2. Adapter (1) nach Anspruch 1, wobei der Befestigungskörper (3) zumindest einen Vorsprung (16.1, 16.2) aufweist, wobei der Vorsprung (16.1, 16.2) sich bei miteinander verbundenen Grundkörper (2) und Befestigungskörper (3) an einem seitlichen Arm (2.2, 2.3) über die Schelle (7.1, 7.2) hinaus hin zu dem Mittelschenkel (2.1) erstreckt und die an dem seitlichen Arm (2.2, 2.3) ausgebildete Ausnehmung (17) zur Aufnahme der Ortungsvorrichtung (18) überdeckt.

3. Adapter (1) nach Anspruch 1 oder 2, wobei die Momentenstütze (3.1) als mit dem Befestigungskörper (3) einstückig ausgebildeter Bogen ausgebildet ist.

4. Adapter (1) nach Anspruch 3, wobei die Momentenstütze (3.1) ein Gewinde (22) zur Aufnahme einer Distanzschraube (23) zum Beabstanden der Momentenstütze (3.1) von dem Vorbau aufweist.

5. Adapter (1) nach Anspruch 4, wobei die Momentenstütze (3.1) im Bereich um das Gewinde (22) eine Materialverstärkung (24) aufweist, wobei sich das Gewinde (22) durch die Materialverstärkung (24) erstreckt.

6. Adapter (1) nach einem der vorhergehenden Ansprüche, wobei an dem Mittelschenkel (2.1), insbesondere an einer Oberseite des Mittelschenkels (2.1), eine erste Gewindebohrung (20) oder ein erster Gewindestift zur Aufnahme einer Kamera und/oder eines mobilen Endgeräts angeordnet ist.

7. Adapter (1) nach Anspruch 6, wobei die erste Gewindebohrung (20) oder der erste Gewindestift ein 1/4" UNC Gewinde aufweist.

8. Adapter (1) nach einem der vorhergehenden Ansprüche, wobei an zumindest einem seitlichen Arm (2.2, 2.3) an einer Außenseite eine zweite Gewindebohrung (21) oder ein zweiter Gewindestift zur Aufnahme einer Trinkflaschenhalterung angeordnet ist.

9. Adapter (1) nach einem der vorhergehenden Ansprüche, wobei an dem Mittelschenkel (2.1) eine Arretiervorrichtung (13) zum Arretieren des ersten Zubehörteils (15) an dem Adapter (1) angeordnet ist.

10. Adapter (1) nach Anspruch 9, wobei die Arretiervorrichtung (13) den Mittelschenkel (2.1) vertikal durchgreift, auf der Unterseite des Mittelschenkels (2.1) eine Arretierfalle (13.1) aufweist und auf der Oberseite des Mittelschenkels (2.1) ein Bedienelement (13.2) zum Lösen der Arretierfalle (13.1) bildet.

11. Adapter (1) nach Anspruch 10, wobei die Arretiervorrichtung (13) ein Schloss (13.3) zum Sperren des Bedienelements (13.2) aufweist, wobei das Schloss (13.3) insbesondere in dem Bedienelement (13.2) integriert ausgebildet ist.

12. Adapter (1) nach einem der vorhergehenden Ansprüche, wobei die Aufnahme (10) für das Zubehörteil (15) in einer Querrichtung (Q) dreigeteilt mit zwei äußeren Vorsprüngen (10.1, 10.2) und einem mittleren Vorsprung (10.3) ausgebildet ist und wobei an einer Oberseite der äußeren Vorsprünge (10.1, 10.2) und an einer Unterseite des mittleren Vorsprungs (10.3) jeweils Hintergriffe (12.1, 12.2, 12.3) ausbildet sind.

13. Adapter (1) nach Anspruch 12, wobei der Hintergriff (12.3) an der Unterseite des mittleren Vorsprungs (10.3) durch die Arretierfalle (13.1) ausgebildet ist.

14. Lenkeranordnung mit einem aus einem Vorbau und einer an dem Vorbau gehaltenen Lenkerstange gebildeten Lenker, einem Adapter (1) nach einem der vorhergehenden Ansprüche und einem an dem Adapter (1) aufgenommenen ersten Zubehörteil (15).

15. Lenkeranordnung nach Anspruch 14, wobei die Aufnahme (10) für das erste Zubehörteil (15) in einer Querrichtung (Q) dreigeteilt mit zwei äußeren Vorsprüngen (10.1, 10.2) und einem mittleren Vorsprung (10.3) ausgebildet ist, wobei an einer Oberseite der äußeren Vorsprünge (10.1, 10.2) und an einer Unterseite des mittleren Vorsprungs (10.3) jeweils Hintergriffe (12.1, 12.2, 12.3) ausbildet sind, und wobei das erste Zubehörteil (15) einen Bügel zum Hintergreifen der Hintergriffe (12.1, 12.2, 12.3) und zum Durchgreifen von Zwischenräumen (11.1, 11.2) zwischen den äußeren Vorsprüngen (10.1, 10.2) und dem mittleren Vorsprung (10.3) aufweist.

## Claims

1. Adapter (1) for attaching a first accessory (15) to a handlebar assembly of a means of transport, wherein the handlebar assembly is formed from a stem and a handlebar mounted at the stem, comprising:
a U-shaped base body (2) comprising a center leg (2.1) and two lateral arms (2.2, 2.3);
a receptacle (10) for the first accessory (15), which receptacle is arranged on the center leg (2.1); and
a mounting body (3) detachably connectable to the base body (2) for attaching the adapter (1) to the handlebar assembly,
wherein the lateral arms (2.2, 2.3) each form together with the mounting body (3) a clamp (7.1, 7.2) for encompassing the handlebar, and
wherein the mounting body (3) comprises a torque support (3.1) for supporting the adapter (1) at the stem;
**characterized in that**
the base body (2) comprises a recess (17) for receiving a tracking device (18), wherein the recess (17) is covered by the mounting body (3) when the base body (2) and the mounting body (3) are connected to one another, or
the mounting body (3) comprises a recess for receiving a tracking device (18), wherein the recess is covered by the base body (2) when the base body (2) and the mounting body (3) are connected to one another.

2. Adapter (1) according to claim 1, wherein the mounting body (3) comprises at least one projection (16.1, 16.2), wherein the projection (16.1, 16.2) extends at a lateral arm (2.2, 2.3) beyond the clamp (7.1, 7.2) toward the center leg (2.1) and covers the recess (17) formed at the lateral arm (2.2, 2.3) for receiving the tracking device (18), when the base body (2) and the mounting body (3) are connected to one another.

3. Adapter (1) according to claim 1 or 2, wherein the torque support (3.1) is configured as an arc formed integrally with the mounting body (3).

4. Adapter (1) according to claim 3, wherein the torque support (3.1) comprises a thread (22) for receiving a spacer screw (23) for spacing the torque support (3.1) from the stem.

5. Adapter (1) according to claim 4, wherein the torque support (3.1) comprises a material reinforcement (24) in the area around the thread (22), wherein the thread (22) extends through the material reinforcement (24).

6. Adapter (1) according to any one of the preceding claims, wherein at the center leg (2.1), in particular at an upper side of the center leg (2.1), a first threaded hole (20) or a first threaded pin for receiving a camera and/or a mobile terminal is arranged.

7. Adapter (1) according to claim 6, wherein the first threaded hole (20) or the first threaded pin has a 1/4" UNC thread.

8. Adapter (1) according to any one of the preceding claims, wherein a second threaded bore (21) or a second threaded pin for receiving a bottle holder is arranged at at least one lateral arm (2.2, 2.3) at an outer side.

9. Adapter (1) according to any one of the preceding claims, wherein a locking device (13) for locking the first accessory (15) to the adapter (1) is arranged at the center leg (2.1).

10. Adapter (1) according to claim 9, wherein the locking device (13) extends vertically through the center leg (2.1), comprises a locking latch (13.1) on the lower side of the center leg (2.1) and forms an operating element (13.2) for releasing the locking latch (13.1) on the upper side of the center leg (2.1).

11. Adapter (1) according to claim 10, wherein the locking device (13) comprises a lock (13.3) for blocking the operating element (13.2), wherein the lock (13.3) is in particular designed to be integrated in the operating element (13.2).

12. Adapter (1) according to any one of the preceding claims, wherein the receptacle (10) for the accessory (15) is divided into three in a transverse direction (Q), formed with two outer projections (10.1, 10.2) and a central projection (10.3), and wherein rear grips (12.1, 12.2, 12.3) are respectively formed on an upper side of the outer projections (10.1, 10.2) and on a lower side of the central projection (10.3).

13. Adapter (1) according to claim 12, wherein the rear grip (12.3) on the lower side of the central projection (10.3) is formed by the locking latch (13.1).

14. Steering assembly comprising a handlebar assembly formed from a stem and a handlebar held on the stem, an adapter (1) according to any one of the preceding claims and a first accessory (15) held at the adapter (1).

15. Steering assembly according to claim 14, wherein the receptacle (10) for the first accessory (15) is divided in three parts in a transverse direction (Q) with two outer projections (10.1, 10.2) and one central projection (10.3), wherein rear grips (12.1, 12.2, 12.3) are respectively formed on an upper side of the outer projections (10.1, 10.2) and on a lower side of the central projection (10.3), and wherein the first accessory (15) comprises a clip adapted to engage behind the rear grips (12.1, 12.2, 12.3) and to pass through intermediate spaces (11.1, 11.2) between the outer projections (10.1, 10.2) and the central projection (10.3).

## Revendications

1. Adaptateur (1) pour fixer un premier accessoire (15) à un guidon d'un moyen de transport formé d'une potence et d'une barre de guidon maintenue sur la potence, présentant
un corps de base (2) en forme de U avec une branche centrale (2.1) et deux bras latéraux (2.2, 2.3) ;
un réceptacle (10) pour le premier accessoire (15) disposé sur la branche centrale (2.1) ; et
un corps de fixation (3) pouvant être relié de manière amovible avec le corps de base (2) pour la fixation de l'adaptateur (1) sur le guidon ;
dans lequel les bras latéraux (2.2, 2.3) forment respectivement avec le corps de fixation (3) un collier de serrage (7.1, 7.2) pour enserrer la barre de guidon ; et
dans lequel le corps de fixation (3) présente un support de couple (3.1) pour soutenir l'adaptateur (1) sur la potence ;
**caractérisé en ce que**
le corps de base (2) présente une cavité (17) pour l'admission d'un dispositif de localisation (18), dans lequel la cavité (17), dans le cas où le corps de base (2) et le corps de fixation (3) sont reliés entre eux, est recouverte par le corps de fixation (3)
ou
le corps de fixation (3) présente une cavité pour l'admission d'un dispositif de localisation (18), dans lequel la cavité, dans le cas où le corps de base (2) et le corps de fixation (3) sont reliés entre eux, est recouverte par le corps de base (2).

2. Adaptateur (1) selon la revendication 1, dans lequel le corps de fixation (3) présente au moins une saillie (16.1, 16.2), dans lequel la saillie (16.1, 16.2), dans le cas où le corps de base (2) et le corps de fixation (3) sont reliés entre eux, s'étend sur un bras latéral (2.2, 2.3) au-delà du collier de serrage (7.1, 7.2) vers la branche centrale (2.1) et recouvre la cavité (17) pour l'admission du dispositif de localisation (18) formée sur le bras latéral (2.2, 2.3).

3. Adaptateur (1) selon la revendication 1 ou la revendication 2, dans lequel le support de couple (3.1) est formé comme une arche d'un seul tenant avec le corps de fixation (3).

4. Adaptateur (1) selon la revendication 3, dans lequel le support de couple (3.1) présente un filetage (22) pour l'admission d'une vis d'écartement (23) afin d'espacer le support de couple (3.1) de la potence.

5. Adaptateur (1) selon la revendication 4, dans lequel le support de couple (3.1) présente un renforcement de matière (24) dans la zone autour du filetage (22), dans lequel le filetage (22) s'étend à travers le renforcement de matière (24).

6. Adaptateur (1) selon l'une des revendications précédentes, dans lequel un premier trou taraudé (20) ou une première tige filetée est disposé(e) sur la branche centrale (2.1), notamment sur une face supérieure de la branche centrale (2.1), pour l'admission d'une caméra et/ou d'un terminal mobile.

7. Adaptateur (1) selon la revendication 6, dans lequel le premier trou taraudé (20) ou la première tige filetée présente un filetage 1/4" UNC.

8. Adaptateur (1) selon l'une des revendications précédentes, dans lequel un second trou taraudé (21) ou une seconde tige filetée est disposé(e) sur au moins un bras latéral (2.2, 2.3) sur une face extérieure pour l'admission d'un support de gourde.

9. Adaptateur (1) selon l'une des revendications précédentes, dans lequel un dispositif de blocage (13) est disposé sur la branche centrale (2.1) pour bloquer le premier accessoire (15) sur l'adaptateur (1).

10. Adaptateur (1) selon la revendication 9, dans lequel le dispositif de blocage (13) traverse la branche centrale (2.1) verticalement, présente sur la face inférieure de la branche centrale (2.1) un loquet de blocage (13.1) et forme sur la face supérieure de la branche centrale (2.1) un élément d'actionnement (13.2) pour libérer le loquet de blocage (13.1).

11. Adaptateur (1) selon la revendication 10, dans lequel le dispositif de blocage (13) présente une serrure (13.3) pour verrouiller l'élément d'actionnement (13.2), dans lequel la serrure (13.3) est formée intégrée, notamment dans l'élément d'actionnement (13.2).

12. Adaptateur (1) selon l'une des revendications précédentes, dans lequel le réceptacle (10) pour l'accessoire (15) est formé divisé en trois dans une direction transversale (Q) avec deux saillies extérieures (10.1, 10.2) et une saillie centrale (10.3) et dans lequel des prises à revers (12.1, 12.2, 12.3) sont respectivement formées sur une face supérieure des saillies extérieures (10.1, 10.2) et sur une face inférieure de la saillie centrale (10.3).

13. Adaptateur (1) selon la revendication 12, dans lequel la prise à revers (12.3) sur la face inférieure de la saillie centrale (10.3) est formée par le loquet de blocage (13.1).

14. Ensemble guidon avec un guidon formé d'une potence et d'une barre de guidon maintenue sur la potence, d'un adaptateur (1) selon l'une des revendications précédentes et d'un premier accessoire (15) inclus sur l'adaptateur (1).

15. Ensemble guidon selon la revendication 14, dans lequel le réceptacle (10) pour le premier accessoire (15) est formé divisé en trois dans une direction transversale (Q) avec deux saillies extérieures (10.1, 10.2) et une saillie centrale (10.3), dans lequel des prises à revers (12.1, 12.2, 12.3) sont respectivement formées sur une face supérieure des saillies extérieures (10.1, 10.2) et sur une face inférieure de la saillie centrale (10.3), et dans lequel le premier accessoire (15) présente un étrier pour saisir par l'arrière les prises à revers (12.1, 12.2, 12.3) et pour traverser des espaces intermédiaires (11.1, 11.2) entre les saillies extérieures (10.1, 10.2) et la saillie centrale (10.3).
